# EUROPÄISCHE PATENTSCHRIFT

(11) **EP 1 970 183 B1**
(45) Veröffentlichungstag und Bekanntmachung des Hinweises auf die Patenterteilung: **02.11.2011**
(21) Anmeldenummer: 08001106.7
(22) Anmeldetag: 22.01.2008
(51) Int. Cl.: B29C 37/00, B60R 21/215

(54) **Nichtsichtbare Airbagklappe, Vorrichtung und Verfahren zu ihrer Herstellung**
Hidden airbag flap, device and method for its production
Clapet d'airbag invisible, dispositif et son procédé de fabrication

(30) Priorität: 12.03.2007 DE 102007011842
(43) Veröffentlichungstag der Anmeldung: 17.09.2008
(73) Patentinhaber: GM Global Technology Operations LLC, Detroit, MI 48265-3000 (US)
(72) Erfinder: Kuhlmann, Klaus, 64569 Nauheim (DE)
(74) Vertreter: Strauss, Peter

(56) Entgegenhaltungen:
- EP-A- 0 428 935
- EP-A- 0 586 222
- EP-A- 0 639 481
- EP-A- 0 791 508
- WO-A-02/02302
- WO-A-03/035435
- DE-A1- 10 149 038
- DE-A1- 10 308 969
- DE-A1- 19 651 532
- FR-A- 2 721 877
- US-A- 6 109 645

## Beschreibung

Die vorliegende Erfindung betrifft ein Verfahren zur Herstellung einer nichtsichtbaren Airbagklappe.

Aus der EP 0 487 753 B1 sind Airbagklappen bekannt, welche von der Fahrzeuginnenseite als solche nicht erkenntlich sind. Aus der DE 101 49 038 A1 ist des Weiteren ein Verfahren zu ihrer Herstellung mittels Hinterschäumen unter Verwendung eines speziellen Schäumwerkzeuges und unter Zuhilfenahme eines abdichtenden Schutzfilmes bekannt.

Airbagklappen gemäß der EP 0 487 753 B1 oder der DE 101 49 038 A1 sind sehr aufwendig in ihrer Herstellung, da mehrstufige Verfahren und/oder aufwendige Fertigungsschritte benötigt werden. Es ist deshalb die Aufgabe der vorliegenden Erfindung, ein Verfahren zur Herstellung einer nichtsichtbaren Airbagklappe bereitzustellen, wobei die Investitionskosten und/oder Produktkosten gering gehalten werden sollen.

Dokument D1 - US6109645 - wird für den nächstliegenden Stand der Technik gehalten und zeigt ein Verfahren wonach zwei beheizte Presswerkzeuge mit einer vorgefertigten Form über einander gebracht werden und durch Verpressen mit einer weiteren Schicht darunter eine Airbagklappe mit unsichtbarer Naht erzeugen können etc.

Erfindungsgemäß wird diese Aufgabe gelöst durch ein Hinterpressen einer vorgeformten Haut mit einem Schaumrücken mit einem dafür vorbereiteten Träger unter Verwendung eines entsprechend modifizierten unteren Presswerkzeuges, durch welches insbesondere aufwendige Anlagen-, Werkzeug-, Teile-, Transport- und Lagerkosten durch Einsatz eines zusätzlichen, einfach geformten Schaumteiles und durch Verwenden eines neuen Presswerkzeuges vermieden werden.

Zur Vorbereitung wird ein Träger mit Aussparungen entlang einer Linie versehen, welche eine Sollbruchstelle entlang der Öffnung der Airbagklappe darstellt. Des Weiteren wird eine vorgeformten Haut mit einem auf der Haut aufgebrachtem Schaumrücken und mit einem Schaumteil, welches auf dem Schaumrücken am Ort einer zu bildenden Sollbruchstelle angeordnet ist, bereitgestellt. Für ein einfach umzusetzendes Verfahren ist es von Vorteil, den Schaumrücken durch Schweißen auf die Haut aufzubringen. Das Schaumteil kann ebenfalls durch Schweißen oder aber durch Kleben an dem Schaumrücken befestigt werden. Die Haut selber kann, entsprechend herkömmlicher Fertigungsverfahren, durch "In Mold Graining", einem Verfahren, bei welchem eine (nicht genarbte) Folie auf ein genarbtes Werkzeug gezogen wird, vorgeformt werden.

In einem nächsten Schritt wird der Träger mit seiner Aussparung auf ein modifiziertes unteres Presswerkzeug aufgebracht. Das untere Presswerkzeug weist eine Prägevorrichtung am Ort der Aussparung auf, welche einen spitz zulaufenden, schneidenförmigen Vorsprung bildet und welcher sich über die gesamte Länge der Sollbruchstelle bzw. den Airbagklappenumriss erstreckt.

Danach wird die vorgeformte Haut mit dem aufgebrachtem Schaumrücken und mit dem Schaumteil auf ein oberes Presswerkzeug aufgebracht und beide Presswerkzeuge erwärmt. Gemäß einer Ausführungsform der vorliegenden Erfindung weisen Schaumrücken, Schaumteil und Träger Polypropylen auf, so dass es von Vorteil ist, mindestens eines der beiden Presswerkzeuge auf ca. 200°C zu erwärmen, um so ein zumindest teilweises Schmelzen und/oder plastischem Verformen von Schaumrücken, Schaumteil und Träger zu erzielen.

Anschließend wird die Haut mit dem aufgebrachtem Schaumrücken und mit dem Schaumteil durch den Träger zum stoffschlüssigen Verbinden von Schaumrücken mit dem Träger und zum Ausformen der Sollbruchstelle hinterpresst, das Presswerkzeug wird abgekühlt, geöffnet und das fertige Teil entnommen.

Das erfindungsgemäße Verfahren vereinfacht die Herstellung einer nichtsichtbaren Airbagklappe für ein Innenraumteil wesentlich. Die Kosten für ein Trägerwerkzeug, für dessen Transport, dessen Lagerung und dessen Steuerung entfallen, wie auch die Kosten für Laser-, Scheide- oder Fräseanlagen zur Erzeugung einer Sollbruchstelle in einem Innenraumteil. Ein weiterer Vorteil der vorliegenden Erfindung ist es, dass durch den vereinfachten Prozess auch die Fehlerrate reduziert wird.

Das erfindungsgemäße Verfahren wird im Folgenden anhand von Ausführungsbeispielen entsprechend der Zeichnung beschrieben.
- Figur 1: zeigt schematisch das Verfahren zur Herstellung einer nichtsichtbaren Airbagklappe,
- Figur 2: zeigt ein Beispiel für eine Armaturentafel mit integ- rierter nichtsichtbarer Airbagklappe, und
- Figur 3: zeigt einen Ausschnitt eines unteren Presswerkzeuges zur Herstellung einer nichtsichtbaren Airbagklappe.

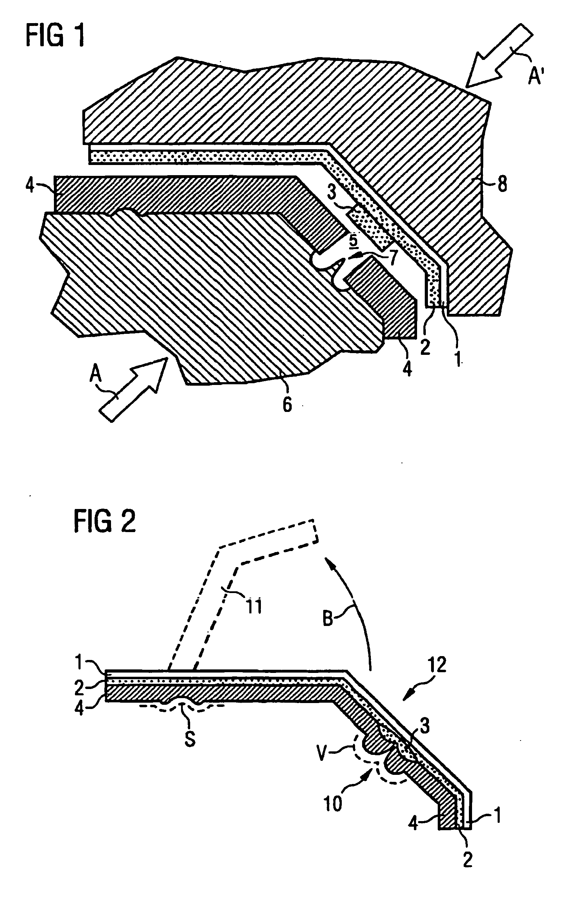

Figur 1 zeigt schematisch und nicht maßstabsgetreu das Verfahren zur Herstellung einer nichtsichtbaren Airbagklappe, welche in eine Armaturentafel integriert wird.

Auf ein unteres Presswerkzeug 6 ist ein Träger 4 aufgebracht. Träger 4 weist am Ort der späteren Sollbruchstelle eine Aussparung 5 auf. Das untere Presswerkzeug 6 weist am Ort der späteren Sollbruchstelle eine Prägevorrichtung 7 zur Ausformung der Sollbruchstelle auf.

Gegenüber dem Träger 4 ist eine vorgeformte Haut 1 mit einem Schaumrücken 2 auf einem oberen Presswerkzeug 8 angeordnet. Die Haut 1 liegt an dem oberen Presswerkzeug 8 an und wird z.B. mittels Vakuum festgehalten. Entlang der Sollbruchstelle ist auf den Schaumrücken 2 ein weiteres, rechteckiges Schaumteil 3 aufgebracht.

Das untere Presswerkzeug 6 und das obere Presswerkzeug 8 sind beheizbar und werden auf ca. 200°C erwärmt, um beim Hinterpressen ein teilweises und/oder örtliches Schmelzen und Verformen des Schaumteils 3 und des Trägers 4 gemäß der durch das Prägewerkzeug 7 vorgegebenen Form, sowie ein Verschmelzen der Oberflächen von Träger 4 und Schaumrücken 2 zu erreichen.

Zur Herstellung einer nichtsichtbaren Airbagklappe beispielsweise in einer Armaturentafel 12 wird gemäß der vorliegenden Erfindung ein neues Hinterpressverfahren angewendet:

Zur Vorbereitung wird vorzugsweise mittels "In Mold Graining", eine Haut 1 bereitgestellt. Auf Innenseite der Haut 1 wird mittels Schweißen ein Schaumrücken 2 aufgebracht. Zur Fertigung der vorgeformten Haut 1 mit dem Schaumrücken 2 sind jedoch auch andere Verfahren bekannt und möglich.

In einem ersten Schritt zur Herstellung der Armaturentafel mit der nichtsichtbaren Airbagklappe wird auf das obere Presswerkzeug 8 die vorgeformte Haut 1 mit dem daran verbundenen Schaumrücken 2 aufgebracht, wobei die Haut 1 an dem oberen Presswerkzeug 8 anliegt und die freie Seite des Schaumrückens 2 von dem oberen Presswerkzeug 8 wegzeigt. Auf dem Schaumrücken 2 wird anschließend am Ort der herzustellenden Sollbruchstelle das Schaumteil 3 angeordnet.

In einem zweiten Schritt wird auf das untere Presswerkzeug 6 der Träger 4 mit der Aussparung 5 aufgebracht. Der Träger 4 wird dabei so angeordnet, dass das Prägerwerkzeug 7 in die Aussparung 5 hineinragt.

In einem nächsten Schritt werden das untere Presswerkzeug 6 und das obere Presswerkzeug 8 erhitzt und die Haut 1 mit dem Träger 4 hinterpresst. Dazu wird das obere Presswerkzeug 8 in Richtung des Pfeils A' auf das untere Presswerkzeug 6 und/oder das untere Presswerkzeug 6 in Richtung des Pfeils A auf das oberer Presswerkzeug 8 bewegt. Durch den Druck einer Hinterpressvorrichtung (nicht gezeigt) und die am unteren und/oder oberen Presswerkzeug anliegenden Temperaturen von ca. 200°C verformen sich unter zumindest teilweisem Erschmelzen Träger 4, Schaumteil 3 und Schaumrücken 2.

Insbesondere verformen sich der Träger 4 im Bereich der Aussparung bzw. der Prägevorrichtung 7, sowie das Schaumteil 3, um die nichtsichtbare Sollbruchstelle der Airbagklappe in der Armaturentafel zu bilden.

Des Weiteren wird durch den Druck und/oder die Temperatur ein stoffschlüssiges Verbinden der Oberflächen von Schaumrücken 2 und Träger 4 erzielt.

Gemäß der hier gezeigten Ausführungsform sind sowohl unteres Werkzeug 6, als auch oberes Werkzeug 8 auf ca. 200°C erwärmt. Es sind jedoch auch Ausführungsformen denkbar und möglich, bei denen nur eines der beiden Presswerkzeuge erwärmt wird. Die hier angegeben Temperatur von ca. 200°C richtet sich nach den verwendeten Materialien für Schaumrücken 2, Schaumteil 3 und/oder Träger 4. In der hier gezeigten Ausführungsform weisen Schaumrücken 2 und Schaumteil 3 Polypropylen (PP), und der Träger 4 einen PP-Langfaservliesverbund auf. Die Haut 1 weist vorzugsweise ein thermische Polyolefin auf.

Die Verwendung anderer Materialien, insbesondere andere Thermoplaste sind gemäß der vorliegenden Erfindung denkbar und möglich. Werden andere Materialien verwendet, kann es von Vorteil sein, andere Temperaturen zu wählen.

Figur 2 zeigt ein Beispiel für eine Armaturentafel 12 mit integrierter nichtsichtbarer Airbagklappe 11 nach Entfernen von unterem Presswerkzeug 6 und oberem Presswerkzeug 8.

Die Armaturentafel 12 weist eine dem Fahrzeuginnenraum zugewandte Haut 1 auf, unter welche der Schaumrücken 2 angeordnet ist. Der Schaumrücken 2 ist ganzflächig mit dem Träger 4 verbunden. An der Sollbruchstelle 10 der Airbagklappe 11 ist zwischen Schaumrücken 2 das aufgeschmolzene und durch die Prägevorrichtung umgeformte Schaumteil 3 angeordnet. Der Träger 4 weist einen mit einer ersten punktierten Linie gekennzeichneten Bereich V auf, welcher durch das Prägerwerkzeug 7 beim Hinterpressen ebenfalls stark wellenförmig verformt wurde und gemeinsam mit dem umgeformten Schaumteil 3 die Sollbruchstelle 10 bildet.

Das Schaumteil 3 erfüllt gemäß der vorliegenden Erfindung insbesondere zwei Aufgaben: Zum einen wird durch das Erschmelzen und/oder Verformen des Schaumteiles 3 das Entstehen von Lücken oder Hohlräumen (nicht gezeigt) um die Sollbruchstelle 10 herum vermieden und zum anderen verleiht das Schaumteil 3 der Sollbruchstelle 10 eine Mindeststabilität, welche benötigt wird, um ungewolltes Aufbrechen der Sollbruchstelle, etwa durch leichte Druck oder Stöße, auszuschließen. Weiterhin erzeugt das Schaumteil 3 örtlich entlang der Sollbruchstelle eine geringe Vorspannung zwischen dem Träger 4 und der Haut 1, welche die erhöhte Elastizität des Trägers 4 in diesem Bereich wieder ausgleicht, so dass keine sichtbaren Unregelmäßigkeiten der Oberfläche der Armaturentafel 12, die das Erscheinungsbild beeinflussen können, auftreten.

Mit den gestrichelten Linien ist die geöffnete Airbagklappe 11 angedeutet, Pfeil B zeigt die Öffnungsrichtung. Mit der zweiten punktierten Linie ist ein Bereich S gekennzeichnet, welcher beim Aufspringen der Airbagklappe 11 eine Scharnierfunktion aufweist und/oder das Aufspringen Feder-ähnlich unterstützt. Die angedeutete Scharnier- und/oder die Öffnungsfunktion kann auf verschieden Arten erzielt werden und ist nicht Gegenstand der vorliegenden Erfindung.

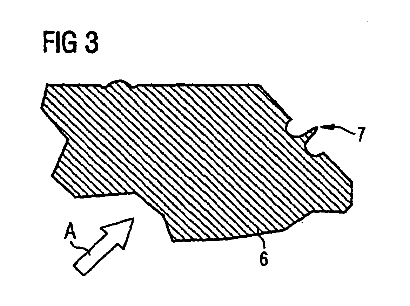

Figur 3 zeigt einen Ausschnitt aus einem unteren Presswerkzeug 6 zur Herstellung einer nichtsichtbaren Airbagklappe mit einer Prägevorrichtung 7, welche verwendet wird, um während des Hinterpressens mittels Druck und/oder Temperatur den Träger 4 und das Schaumteil 3 so umzuformen, dass eine Sollbruchstelle 10 für die Airbagklappe 11 ausgebildet wird.

### Bezugszeichen

- 1): Haut
- 2): Schaumrücken
- 3): Schaumteil
- 4): Träger
- 5): Aussparung
- 6): Presswerkzeug Unterteil
- 7): Prägevorrichtung für Sollbruchstelle
- 8): Presswerkzeug Oberteil
- 9): Armaturentafel mit Airbagdeckel
- 10): Sollbruchstelle
- 11): geöffnete Airbagklappe
- 12): Armaturentafel

- A): Pressrichtung Presswerkzeug Unterteil
- A'): Pressrichtung Presswerkzeug Oberteil
- B): Öffnungsrichtung Airbag
- V): verformter Bereich im Träger
- S): Scharnierfunktion

## Patentansprüche

1. Verfahren zur Herstellung einer nichtsichtbaren Airbagklappe (11), welches die folgenden Schritte aufweist:
- Bereitstellen eines Trägers (4) mit einer Aussparung (5) ;
- Bereitstellen einer vorgeformten Haut (1) mit einem auf der Haut (1) aufgebrachtem Schaumrücken (2) und mit einem Schaumteil (3), welches auf dem Schaumrücken (2) am Ort einer zu bildenden Sollbruchstelle (10) angeordnet ist;
- Aufbringen des Trägers (4) auf ein unteres Presswerkzeug (6), welches eine Prägevorrichtung (7) am Ort der Aussparung (5) aufweist;
- Erwärmen des unteren Presswerkzeuges (6);
- Aufbringen der vorgeformtem Haut (1) auf ein oberes Presswerkzeug (8);
- Erwärmen des oberen Presswerkzeuges (8);
- Hinterpressen der Haut (1) mit dem aufgebrachtem Schaumrücken (2) und mit dem Schaumteil (3) durch den Träger (4) zum stoffschlüssigen Verbinden von dem Schaumrücken (2) mit dem Träger (4) und zum Ausformen der Sollbruchstelle (10) in dem Träger (4) und dem Schaumteil (3).

2. Verfahren zur Herstellung einer nichtsichtbaren Airbagklappe (11) nach Anspruch 1, **dadurch gekennzeichnet, dass** der Schaumrücken 2 durch Schweißen auf die Haut (1) aufgebracht wird.

3. Verfahren zur Herstellung einer nichtsichtbaren Airbagklappe (11) nach Anspruch 1 oder Anspruch 2, **dadurch gekennzeichnet, dass** die Haut (1) mit dem Schaumrücken (2) durch "In Mold Graining" vorgeformt wird.

4. Verfahren zur Herstellung einer nichtsichtbaren Airbagklappe (11) nach einem der vorigen Ansprüche, **dadurch gekennzeichnet, dass** die Temperaturen für das untere Presswerkzeug (6) und/oder das obere Presswerkzeug (8) so gewählt werden, dass der Schaumrücken (2), das Schaumteil (3) und/oder der Träger (4) zumindest teilweise schmelzen und/oder plastisch verformt werden.

## Claims

1. A method for producing a hidden airbag flap (11), comprising the following steps:
- providing a carrier (4) with a recess (5);
- providing a preformed skin (1) with an applied foam backing (2) and a foam part (3) which is arranged on the foam backing (2) at the location of a predetermined breaking point (10) to be formed;
- application of the carrier (4) on a lower compression molding die (6) which comprises an embossing apparatus (7) at the location of the recess (5);
- heating of the lower compression molding die (6);
- application of the preformed skin (1) on an upper compression molding die (8);
- heating of the upper compression molding die (8);
- back compression of the skin (1) with the applied foam backing (2) and the foam part (3) by the carrier (4) for materially connecting the foam backing (2) with the carrier (4) and for forming the predetermined breaking point (10) in the carrier (4) and the foam part (3).

2. A method for producing an invisible airbag flap (11) according to claim 1, **characterized in that** the foam backing (2) is applied by welding to the skin (1).

3. A method for producing an invisible airbag flap (11) according to claim 1 or claim 2, **characterized in that** the skin (1) with the foam backing (2) is preformed by "in-mold graining".

4. A method for producing an invisible airbag flap (11) according to one of the preceding claims, **characterized in that** the temperatures for the bottom compression molding die (6) and/or the upper compression molding die (8) are chosen in such a way that the foam backing (2), the foam part (3) and/or the carrier (4) will melt at least partly and/or will be deformed plastically.

## Revendications

1. Procédé pour la fabrication d'un volet pour coussin gonflable de sécurité invisible (11), comportant les étapes suivantes :
- préparation d'un support (4) avec une ouverture (5) ;
- préparation d'une peau préformée (1) avec un dos en mousse (2) appliqué sur la peau (1) et avec une partie en mousse (3) qui est disposée sur le dos en mousse (2) à l'emplacement d'un point de rupture désigné (10) à former ;
- pose du support (4) sur un outil de presse inférieur (6) qui présente un dispositif d'emboutissage (7) à l'emplacement de l'ouverture (5) ;
- chauffage de l'outil de presse inférieur (6) ;
- pose de la peau préformée (1) sur un outil de presse supérieur (8) ;
- chauffage de l'outil de presse supérieur (8) ;
- pressage par l'arrière de la peau (1) avec le dos en mousse (2) posé et avec la partie en mousse (3) par le support (4) pour assembler par solidarité de matière le dos en mousse (2) avec le support (4) et former le point de rupture désigné (10) dans le support (4) et la partie en mousse (3).

2. Procédé pour la fabrication d'un volet pour coussin gonflable de sécurité invisible (11) selon la revendication 1, **caractérisé en ce que** le dos en mousse (2) est appliqué par soudage sur la peau (1).

3. Procédé pour la fabrication d'un volet pour coussin gonflable de sécurité invisible (11) selon la revendication 1 ou 2, **caractérisé en ce que** la peau (1) est préformée avec le dos en mousse (2) par le procédé de grainage dans le moule (« In Mold Graining »).

4. Procédé pour la fabrication d'un volet pour coussin gonflable de sécurité invisible (11) selon l'une des revendications précédentes, **caractérisé en ce que** les températures de l'outil de presse inférieur (6) et/ou de l'outil de presse supérieur (8) sont choisies de telle façon que le dos en mousse (2), la partie en mousse (3) et/ou le support (4) fondent au moins partiellement et/ou soient soumis à une déformation plastique.
